# EUROPÄISCHE PATENTANMELDUNG

(11) **EP 4 653 073 A1**
(43) Veröffentlichungstag der Anmeldung: **26.11.2025**
(21) Anmeldenummer: 24177461.1
(22) Anmeldetag: 22.05.2024
(51) Int. Cl.: B01D 29/96, B01D 35/30

(54) **VORRICHTUNG UND VERFAHREN ZUM ANSCHLIESSEN EINER REINIGUNGSKARTUSCHE AN EIN WASSERAUFBEREITUNGSSYSTEM, SOWIE WASSERAUFBEREITUNGSGERÄT**

(71) Anmelder: Sartorius Lab Instruments GmbH & Co. KG, 37079 Göttingen (DE)
(72) Erfinder: BRUCHWALSKI, Janis, 37079 Göttingen (DE); RITZKA, Roman, 37079 Göttingen (DE)
(74) Vertreter: Prinz & Partner mbB

(57) **Zusammenfassung**

Eine Vorrichtung (10) zum Anschließen einer Reinigungskartusche (12) an ein Wasseraufbereitungssystem umfasst eine obere Aufnahme (26), die wenigstens zwei, vorzugsweise drei, definiert positionierte Anschlüsse (28) zur Kopplung von entsprechend definiert positionierten Anschlüssen (32) der Kartusche (12) aufweist. Die erfindungsgemäße Vorrichtung (10) umfasst ferner eine Halterung (22), in die die Kartusche (12) einsetzbar ist, wobei die Halterung (22) eine Aufnahmekontur aufweist, die ein Einsetzen der Kartusche (12) nur in einer vorgegebenen Orientierung und kein Verdrehen oder horizontales Verschieben der vollständig eingesetzten Kartusche (12), ausgenommen in der zu einer Einschubrichtung entgegengesetzten Richtung, erlaubt. Die erfindungsgemäße Vorrichtung (10) umfasst des Weiteren einen Verstellmechanismus zum Verstellen der vertikalen Position der Anschlüsse (32) der Kartusche (12) oder der Anschlüsse (28) der Aufnahme (26), sodass die Anschlüsse (32) der Kartusche (12) und die Anschlüsse (28) der Aufnahme (26) wahlweise gegeneinander gedrückt oder voneinander entfernt werden können.

## Beschreibung

Die Erfindung betrifft eine Vorrichtung und ein Verfahren zum Anschließen einer Reinigungskartusche an ein Wasseraufbereitungssystem. Die Erfindung betrifft ferner ein Wasseraufbereitungsgerät mit einer solchen Vorrichtung und einer Reinigungskartusche.

In der Wasserreinigung bzw. -aufbereitung, insbesondere für Laborzwecke, kommen Wasseraufbereitungssysteme zum Einsatz, die Verunreinigungen aus dem Wasser entfernen. Wesentlicher Bestandteil solcher Wasseraufbereitungssysteme sind Reinigungskartuschen, durch die das Wasser zur Aufreinigung durchgeleitet wird. Eine Reinigungskartusche wird typischerweise mittels einer Anschlussvorrichtung an ein Wasseraufbereitungssystem angeschlossen, wobei die Anschlussvorrichtung und eine oder mehrere darin eingesetzte Reinigungskartuschen zusammen ein Wasseraufbereitungsgerät bilden. Die Reinigungskartuschen sind Verbrauchsmaterial und müssen in bestimmten Intervallen ausgetauscht werden.

Aus der US 11 358 076 B2 ist eine Filterkopplungsvorrichtung mit Verbindungselementen, einer Grundplatte, einem Filterhalter, einer Rotationswelle und einem Schenkel bekannt. Der Filterhalter ermöglicht die Aufnahme einer ersten Filterkartusche mit einer ersten Anordnung von Verbindungsöffnungen in einer ersten Stellung oder die Aufnahme einer zweiten Filterkartusche mit einer anderen Anordnung von Verbindungsöffnungen in einer zweiten Stellung. Der Filterhalter kann durch Drehung um die Rotationswelle zwischen den beiden Stellungen wechseln. Die Anordnung der Verbindungselemente der Vorrichtung kann mittels einer Wechselanordnung in die zur jeweiligen Filterkartusche passende Konfiguration überführt werden. Eine in den Filterhalter eingesetzte und von Hand positionierte Filterkartusche wird mithilfe eines an den Filterhalter gekoppelten Hebels angehoben, sodass die Verbindungsöffnungen der Filterkartusche an die Verbindungselemente der Vorrichtung angeschlossen werden. Die Abdichtung zwischen einer Verbindungsöffnung einer Filterkartusche und dem entsprechenden Verbindungselement wird jeweils durch ein an die Verbindungsöffnung angepasstes, das Verbindungselement umgreifendes formschlüssiges Dichtelement erreicht.

Die US 2021/031126 A1 zeigt eine Vorrichtung zum Anschließen einer Filtercapsule, die auf ihrer oberen und unteren Stirnseite jeweils mittig einen axial vorstehenden Anschluss aufweist. Die Filtercapsule wird zunächst horizontal in die Vorrichtung bewegt, sodass der obere Anschluss in einem Schlitz der Vorrichtung platziert wird. Anschließend wird die Filtercapsule abgesenkt, sodass der untere Anschluss in einer Öffnung der Vorrichtung platziert wird. Durch Betätigung eines Drehhebels wird ein vertikal beweglicher erster Fluidkanal der Vorrichtung um ein bestimmtes Maß nach unten gedrückt, um die Filtercapsule einzuspannen und die beiden Anschlüsse mit dem ersten bzw. einem zweiten Anschluss der Vorrichtung zu verbinden. Die Abdichtung der Verbindungen erfolgt mit Radialdichtungen. Da nur jeweils ein zentraler Anschluss auf den Stirnseiten der Filtercapsule vorgesehen ist, kann die Filtercapsule in einer beliebigen Orientierung eingesetzt werden.

Die in der US 11 202 980 B2 gezeigte Vorrichtung dient ebenfalls zum Anschließen einer Filterkartusche, die auf jeder Stirnseite jeweils mittig einen vorstehenden Anschluss aufweist. Dazu werden die Anschlüsse der Filterkartusche in Aufnahmen mit Drehelementen für diese Anschlüsse eingesetzt Die Anschlüsse der Filterkartuschen sind abgeschrägt, wodurch die Kartusche in der Vorrichtung eingespannt wird. Durch Drehen der Filterkartusche wird diese in der Vorrichtung fixiert.

Aufgabe der Erfindung ist es, das Anschließen einer Reinigungskartusche an ein Wasseraufbereitungssystem zu vereinfachen und sicherer zu machen. Ein Anschließen bzw. Lösen einer Kartusche soll schnell und ohne Werkzeug möglich sein.

Gelöst wird diese Aufgabe durch eine Vorrichtung mit den Merkmalen des Anspruchs 1 und durch ein Wasseraufbereitungsgerät nach Anspruch 11 sowie durch ein Verfahren mit den Merkmalen des Anspruchs 15. Vorteilhafte und zweckmäßige Ausgestaltungen der erfindungsgemäßen Vorrichtung und des erfindungsgemäßen Verfahrens sind in den zugehörigen Unteransprüchen angegeben.

Die erfindungsgemäße Vorrichtung zum Anschließen einer Reinigungskartusche an ein Wasseraufbereitungssystem umfasst eine obere Aufnahme, die wenigstens zwei, vorzugsweise drei, definiert positionierte Anschlüsse zur Kopplung von entsprechend definiert positionierten Anschlüssen der Kartusche aufweist. Die erfindungsgemäße Vorrichtung umfasst ferner eine Halterung, in die die Kartusche einsetzbar ist, wobei die Halterung eine Aufnahmekontur aufweist, die ein Einsetzen der Kartusche nur in einer vorgegebenen Orientierung und kein Verdrehen oder horizontales Verschieben der vollständig eingesetzten Kartusche, ausgenommen in der zu einer Einschubrichtung entgegengesetzten Richtung, erlaubt. Die erfindungsgemäße Vorrichtung umfasst des Weiteren einen Verstellmechanismus zum Verstellen der vertikalen Position der Anschlüsse der eingesetzten Kartusche oder der Anschlüsse der Aufnahme, sodass die Anschlüsse der eingesetzten Kartusche und die Anschlüsse der Aufnahme wahlweise in eine Anschlussposition, in der die Anschlüsse vertikal gegeneinandergedrückt werden, und in eine Freigabeposition, in der die Anschlüsse vertikal voneinander entfernt sind, überführt werden können.

Unter "definiert positionierten" Anschlüssen sind im Sinne der Erfindung Anschlüsse zu verstehen, deren Position relativ zu den unbeweglichen Teilen der Vorrichtung vorgegeben ist. Dies trifft beispielsweise nicht auf lose Schlauchenden zu.

Die vorgegebene Orientierung der Kartusche ist eine vorbestimmte Drehstellung der Kartusche, die sich auf eine vertikale Achse der Kartusche bezieht, wenn sich die Kartusche in der Gebrauchsstellung befindet, und zwar relativ zur stationären Vorrichtung. Wenn die Kartusche beispielsweise zylinderförmig ist und an einer Stelle an ihrem Umfang einen Vorsprung hat, der nur in einer einzigen Drehstellung der Kartusche in eine passende Aufnahme der Vorrichtung passt, dann ist diese Drehstellung die vorgegebene Orientierung der Kartusche. Allgemein ist durch dieses Poka-Yoke-Prinzip sichergestellt, dass die Kartusche nicht in einer falschen Orientierung in die Vorrichtung eingesetzt werden kann, die zu einer Fehlfunktion führen würde.

Eine vorgegebene Orientierung kann sich bei einer im Wesentlichen rotationssymmetrischen Kartusche auch aus der Belegung der Anschlüsse ergeben. Beispielsweise kann die Vorgabe darin bestehen, dass ein bestimmter Anschluss der Kartusche beim Einsetzen der Vorrichtung zugewandt sein muss, damit die Anordnung der Anschlüsse der Kartusche dann zur Anordnung der Anschlüsse der Vorrichtung passt.

Die erfindungsgemäß vorgesehene Aufnahmekontur schließt nicht nur ein falsches Einsetzen der Kartusche aus, sondern verhindert zudem, dass die Kartusche vor dem eigentlichen Koppeln der Anschlüsse ungewollt verrutschen oder verdreht werden kann.

Erfindungsgemäß dient der Verstellmechanismus dazu, die vertikale Position der Anschlüsse der eingesetzten Kartusche oder der Anschlüsse der Aufnahme zu verstellen, nämlich in eine Anschlussposition, in der die Anschlüsse gegeneinandergedrückt werden, und in eine Freigabeposition, in der die Anschlüsse voneinander entfernt sind. Dies schließt folgende zwei Optionen ein: Gemäß einer ersten Alternative ist es die Kartusche, die angehoben bzw. abgesenkt wird, um die Anschlüsse zu koppeln bzw. zu entkoppeln, während die Anschlüsse der Vorrichtung unbewegt bleiben. Gemäß einer zweiten Alternative bleibt die eingesetzte Kartusche unbewegt, und es werden stattdessen die Anschlüsse der Vorrichtung abgesenkt und angehoben, um die Anschlüsse zu koppeln bzw. zu entkoppeln. Obwohl die zweite Alternative den Vorteil hat, dass beim Verstellen, insbesondere beim Ankoppeln der Anschlüsse, nicht die Gewichtskraft der Kartusche, die mehrere Kilogramm schwer sein kann, überwunden werden muss, wird die Erfindung nachfolgend vorwiegend anhand der ersten Alternative beschrieben.

Vorzugsweise ist die Aufnahme mit den Anschlüssen in einen Deckelabschnitt der Vorrichtung integriert. Das bedeutet zwangsläufig, dass die Anschlüsse der Kartusche auf einer oberen Stirnseite der Kartusche angeordnet sein müssen. Diese bevorzugte Gestaltung beruht auf der Erkenntnis, dass obenliegende Anschlüsse einer Kartusche weniger tropfen und eine leichtere Entlüftung ermöglichen. Wenn alle Anschlüsse oben an der Kartusche angeordnet sind, vereinfacht sich die Gestaltung der übrigen Wandungsteile der Kartusche, insbesondere des Mittelteils und des Kartuschenbodens, der so gestaltet werden kann, dass die Kartusche ohne Hilfsmittel aufrecht stehen kann.

Eine besonders vorteilhafte Gestaltung der Aufnahmekontur der Halterung sieht eine Auflagefläche vor, deren Außenbereich teilweise, vorzugsweise über den halben Umfang der Halterung, von einer Randstruktur überdeckt ist. Die Randstruktur kann hinsichtlich Form und Größe des Bereichs, der überdeckt wird, auf eine passende Struktur eines radial vorstehenden Randbereichs des Bodens der Kartusche abgestimmt werden, um die vorgegebene Orientierung der Kartusche sicherzustellen. Außerdem sorgt die übergreifende Randstruktur im Rahmen eines Lösens der Kartusche dafür, dass beim Absenken der Halterung die Kartusche tatsächlich mitgenommen wird, sodass deren Anschlüsse von den Anschlüssen der Aufnahme abgezogen werden. Auch für die zweite Alternative, bei der nicht die Halterung mit der eingesetzten Kartusche, sondern die Aufnahme mit den Anschlüssen der Vorrichtung bewegt wird, ist die Randstruktur der Halterung vorteilhaft. Dank der Überdeckung des radial vorstehenden Randbereichs des Bodens der eingesetzten Kartusche durch die Randstruktur der Halterung ist sichergestellt, dass bei einem Anheben der Aufnahme mit den vorrichtungsseitigen Anschlüssen die Kartusche nicht in unerwünschter Weise mitgenommen wird.

Die Anschlüsse der Aufnahme weisen vorzugsweise eine konische Kontur auf. Die konische Kontur kann beim Anschließen der Kartusche als selbstzentrierende Führung für die Anschlüsse der Kartusche und zu deren automatischer Feinjustage genutzt werden, insbesondere wenn die Anschlüsse der Kartusche eine komplementäre Kontur aufweisen.

Insbesondere wenn die aneinander gekoppelten Anschlüsse einem hohen Druck von 5 bar oder mehr standhalten sollen, ist - abgesehen von einem ausreichenden Anpressdruck - eine zuverlässige Dichtung wünschenswert. Obwohl viele verschiedene Dichtungsarten bekannt sind, erweisen sich für den vorgesehenen Zweck Axialdichtungen zwischen den Anschlüssen der Aufnahme und den Anschlüssen der Kartusche als am besten geeignet. "Axial" bezieht sich hierbei auf eine vertikale Achse. Im Vergleich zu Radialdichtungen muss weniger Kraft zum Hineindrücken der Anschlüsse aufgewendet werden, um die erforderliche Dichtwirkung zu erreichen. Als Axialdichtungen eignen sich insbesondere entsprechend angeordnete O-Ringe oder Flachdichtungen.

Besonders vorteilhaft ist eine Gestaltung, bei der die Anschlüsse der Kartusche oder der Aufnahme jeweils einen Dom aufweisen, auf den die Axialdichtung gespannt ist. Die auf den Dom gespannte Axialdichtung befindet sich dann automatisch in der richtigen Position und kann nicht einfach verloren gehen. Zwar ist es grundsätzlich auch möglich, eine Flachdichtung mit einem geeigneten Innendurchmesser so über einen Dom zu stülpen, dass sie dort festklemmt; ein O-Ring aus einem elastischen Material ist diesbezüglich aber die bessere Wahl.

Der Verstellmechanismus zum Anheben und Absenken der Anschlüsse der Kartusche oder der Vorrichtung sollte im Hinblick auf eine kostengünstige Fertigung und eine leichte und zuverlässige Bedienbarkeit möglichst unkompliziert mit wenigen Teilen aufgebaut sein und möglichst wenige Bedienschritte erfordern. Gemäß einer bevorzugten Ausführungsform weist der Verstellmechanismus eine Spindel, vorzugsweise in Form einer Rändelschraube, mit einem Gewinde auf, das mit einem Gewinde der Halterung oder der Aufnahme zusammenwirkt. Eine Spindel, insbesondere eine Rändelschraube, ist ein benutzerfreundliches Bedienelement, das auf sehr einfache Weise ein vertikales Verstellen der Anschlüsse zum An- bzw. Entkoppeln ermöglicht. Dank der ineinandergreifenden Gewinde wird eine Drehung der Spindel in eine vertikale, translatorische Bewegung der Halterung mit der darin eingesetzten Kartusche bzw. der Aufnahme mit den Anschlüssen der Vorrichtung umgewandelt.

Ein solcher Verstellmechanismus mit den Gewinden hat gegenüber bekannten Lösungen mit einem Schwenkhebel oder dergl. den Vorteil, dass das Maß der vertikalen Anhebung bzw. Absenkung sehr genau eingestellt werden kann. Dadurch können größere Toleranzen beim Höhenmaß der Kartusche ausgeglichen werden. Wenn die Kartusche etwa durch Verschweißen eines Bodens, eines Mittelteils und eines Deckels hergestellt wird, kann das Höhenmaß der Kartusche eine Toleranz von ± 2,5 mm haben. Die Verstellung mittels der Spindel erlaubt es, solche Toleranzen auszugleichen und auch bei hohen Drücken eine sichere, dichte Kopplung der Anschlüsse zu gewährleisten.

Eine Weiterbildung dieses Konzepts sieht vor, dass die beiden Gewinde ein selbsthemmendes Getriebe bilden. Selbsthemmung bedeutet, dass eine relative Bewegung zwischen der Spindel und der Halterung bzw. der Aufnahme ohne äußerliche Krafteinwirkung nicht möglich ist. Das bedeutet, dass sich auch in der belasteten Anschlussposition die Anschlüsse der Kartusche und der Vorrichtung nicht von alleine voneinander entfernen können. Auf eine zusätzliche Sicherung (Einrastmechanismus oder dergl.) kann also verzichtet werden, was den Aufbau der Vorrichtung vereinfacht und die Anschlusszeit verkürzt. In Abhängigkeit von den für die Gewinde verwendeten Materialien und dem daraus resultierenden Reibwert und von der Art des Gewindes kann eine maximale Gewindesteigung für eine Selbsthemmung bestimmt werden. Beispielsweise darf bei einem Trapezgewinde der Steigungswinkel typischerweise nicht größer als 2°30' sein.

Beim Verstellen mithilfe der Spindel sollte sich diese nicht vertikal mitbewegen. Deshalb empfiehlt sich eine Führungsstruktur, die ein Drehen der Spindel erlaubt, aber gleichzeitig ein vertikales Verschieben der Spindel verhindert.

Hierzu kann die Führungsstruktur einen an einem Bodenabschnitt der Vorrichtung angeordneten Zylinder zur drehbaren Lagerung der Spindel und einen vertikal fixierten horizontalen Flansch aufweisen, der einen horizontalen Abschnitt der Spindel überdeckt und damit ein "Abheben" der Spindel verhindert.

Selbst wenn sichergestellt ist, dass sich die eingesetzte Kartusche in der Halterung nicht mehr verdrehen lässt, muss im Falle einer vertikal beweglichen Halterung (entsprechend der weiter oben beschriebenen ersten Alternative, bei der nicht die Anschlüsse der Vorrichtung, sondern die in die Halterung eingesetzte Kartusche angehoben bzw. abgesenkt wird) darüber hinaus sichergestellt sein, dass sich die Halterung selbst nicht verdrehen kann. Dies ist auch für die Funktion des Verstellmechanismus wichtig, denn die Halterung soll sich ja nicht mit der Spindel mitdrehen, sondern durch die Relativbewegung angehoben bzw. abgesenkt werden. Gemäß einer bevorzugten Ausführungsform ist deshalb eine Sperrstruktur vorgesehen, die ein Verdrehen der Halterung verhindert, aber ein Drehen der Spindel nicht behindert. Die Sperrstruktur kann beispielsweise durch einen gehäusefesten Vorsprung, der in eine vertikale Nut der Halterung eingreift, realisiert werden.

Zur leichteren Bedienung der Spindel kann diese mit einem Bedienhebel ausgestattet werden.

Im Hinblick auf eine ungefährliche Bedienung (Vermeidung einer Einklemmgefahr) und einen sicheren Betrieb (Schutz des Verstellmechanismus vor eindringendem Schmutz) kann die als Rändelschraube ausgebildete Spindel mit einem vertikal erhöhten Rand versehen werden, um einen ansonsten offenen Spalt zwischen der Rändelschraube und der Halterung abzudecken.

Um eine definierte Anschlussposition vorzugeben oder im Hinblick auf eine Automatisierung des Verstellmechanismus mit einem Antrieb, kann ein Endlagensensor, vorzugsweise am Deckelabschnitt, vorgesehen werden, der ein von der vertikalen Position der Kartusche relativ zur Aufnahme abhängiges Signal ausgibt. Der Sensor kann z. B. ein einfacher Kontaktsensor oder ein Näherungssensor sein.

Die Erfindung schafft auch ein Wasseraufbereitungsgerät mit einer Vorrichtung, wie sie oben definiert ist, und einer Reinigungskartusche. Die Kartusche weist einen unteren Boden, einen oberen Deckel und einen dazwischenliegenden Mittelteil auf, wobei im Deckel mehrere Anschlüsse gebildet sind.

Die Kopplung der Anschlüsse kann dadurch einfacher und sicherer gemacht werden, dass die Anschlüsse der Kartusche eine zur Kontur der Anschlüsse der Vorrichtung komplementäre Kontur aufweisen.

Wie bereits erwähnt, soll die Gestaltung der Aufnahmekontur der Halterung ein falsches Einsetzen der Kartusche ausschließen und zudem verhindern, dass ungewollt die Position oder Orientierung der Kartusche verändert wird. Gemäß einer bevorzugten Ausführungsform weist zur Verwirklichung dieses Poka-Yoke-Prinzips auch die Kartusche eine spezielle Einschubkontur auf, die auf die Aufnahmekontur der Halterung abgestimmt ist, wobei die Einschubkontur der Kartusche vorzugsweise im Boden gebildet ist.

Passend zur bevorzugten Gestaltung der Aufnahmekontur der Halterung kann die Einschubkontur der Kartusche eine vertikal erhöhte Struktur aufweisen, die sich über den halben Umfang der Kartusche erstreckt, sodass die Kartusche nur in einer Orientierung in die Halterung eingesetzt werden kann, in der sich die Randstruktur der Halterung und die vertikal erhöhte Struktur der Kartusche nicht blockieren. Bei geeigneter Anordnung ergänzen sich diese Strukturen so, dass in Umfangsrichtung zwischen ihnen kein Freiraum verbleibt, der ein Verdrehen der Kartusche erlauben würde.

Um das Einsetzen der Kartusche in die Halterung zu erleichtern, kann die Reibung des Kartuschenbodens auf der Auflagefläche der Halterung reduziert werden, indem am Kartuschenboden vertikal nach unten vorstehende Kufen vorgesehen werden.

Die Erfindung schafft darüber hinaus ein Verfahren zum Anschließen einer Reinigungskartusche an ein Wasseraufbereitungssystem mit folgenden Schritten: - Bereitstellen eines Wasseraufbereitungsgeräts, wie es oben definiert wurde; Einsetzen der Kartusche in die Halterung in der vorgegebenen Orientierung; und Verstellen der vertikalen Position der Anschlüsse der Kartusche oder der Anschlüsse der Aufnahme mittels des Verstellmechanismus, sodass die Anschlüsse der Kartusche und die Anschlüsse der Aufnahme gegeneinandergedrückt werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen schematisch:
- Figur 1 eine perspektivische Ansicht einer zusammengebauten erfindungsgemäßen Vorrichtung vor dem Einsetzen einer Reinigungskartusche;
- Figur 2 eine Schnittansicht der Vorrichtung ohne Kartusche;
- Figur 3 eine perspektivische Ansicht des oberen Teils des Gehäuses der Vorrichtung;
- Figur 4 eine perspektivische Ansicht des unteren Teils des Gehäuses der Vorrichtung;
- Figur 5 eine Detail-Schnittansicht des unteren Teils der Vorrichtung mit eingesetzter Kartusche;
- Figur 6 eine perspektivische Ansicht der Halterung der Vorrichtung und des Bodens der Kartusche;
- Figur 7 eine Detail-Schnittansicht der Halterung und des Kartuschenbodens;
- Figur 8 eine perspektivische Ansicht der Unterseite des Kartuschenbodens;
- Figur 9 eine Sequenz der Schritte zum Anschließen der Kartusche in der Vorrichtung;
- Figur 10 eine perspektivische Ansicht der Spindel der Vorrichtung gemäß einer alternativen Ausführungsform;
- Figur 11 eine perspektivische Ansicht einer zusammengebauten erfindungsgemäßen Vorrichtung mit eingesetzter Kartusche gemäß einer alternativen Ausführungsform der Spindel; und
- Figur 12 eine perspektivische Schnittansicht des oberen Teils der Vorrichtung gemäß einer alternativen Ausführungsform mit einem Endlagensensor;
- Figur 13 eine perspektivische Schnittansicht des oberen Teils der Vorrichtung gemäß einer alternativen Ausführungsform mit obenliegendem Verstellmechanismus.

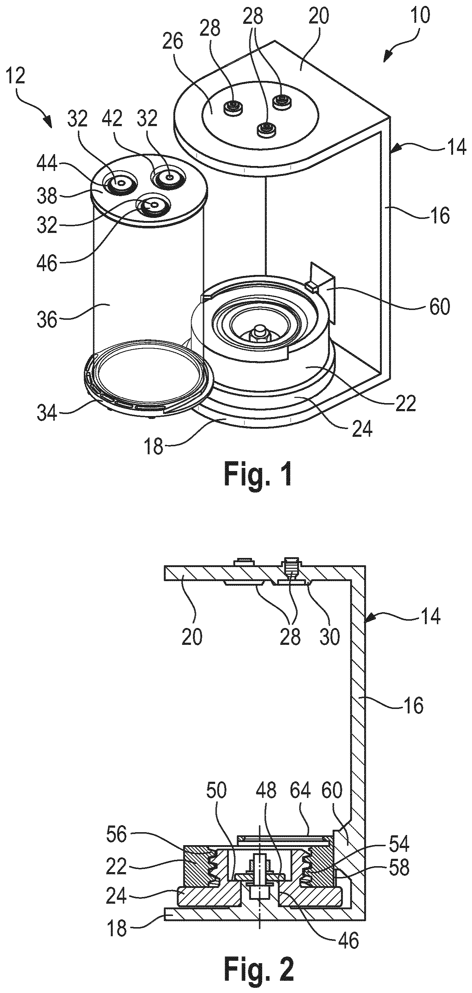

In Figur 1 ist beispielhaft eine Vorrichtung 10 zum Anschließen einer Reinigungskartusche 12 an ein Wasseraufbereitungssystem mit einer solchen Kartusche 12 gezeigt, wobei die Kartusche 12 teiltransparent dargestellt ist.

In der folgenden Beschreibung beziehen sich Angaben wie "oben", "unten" etc. auf die in Figur 1 gezeigte Gebrauchsstellung der Vorrichtung 10.

Wesentliche Bestandteile der Vorrichtung 10, die in Figur 2 ohne Kartusche 12 in einer Schnittdarstellung gezeigt ist, sind ein Gehäuse 14 mit einem sich vertikal erstreckenden Mittelabschnitt 16, von dem unten ein Bodenabschnitt 18 und oben ein Deckelabschnitt 20 horizontal abstehen, sowie eine Halterung 22 für die Kartusche 12 und ein Verstellmechanismus mit einer Spindel, die bei den hier beschriebenen Ausführungsformen als bedienerfreundliche Rändelschraube 24 ausgebildet ist.

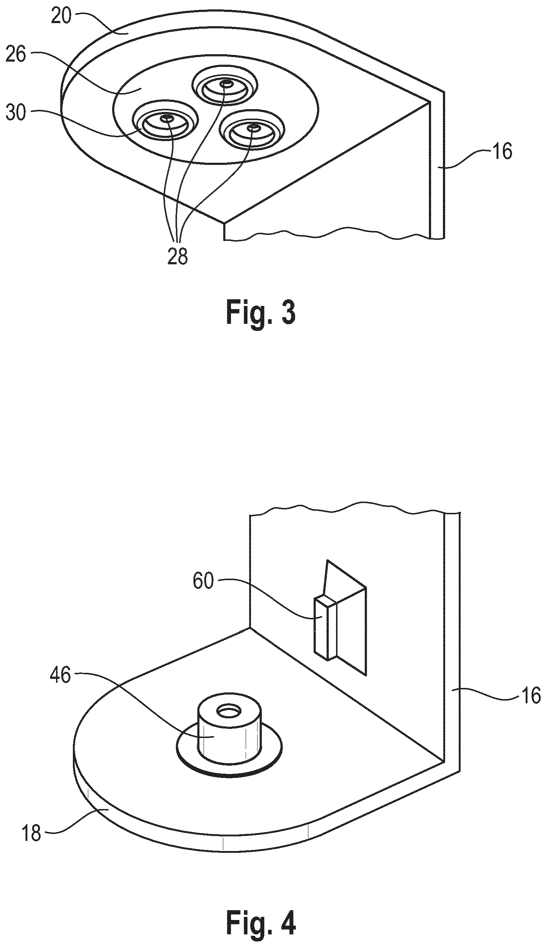

In den Deckelabschnitt 20 des Gehäuses 14 ist eine obere Aufnahme 26 mit mehreren - hier drei - Anschlüssen 28 integriert (siehe auch Figur 3). Die Anschlüsse 28 sind auf deren oberen Seite mit Fluidleitungen eines Wasseraufbereitungssystems (nicht gezeigt) verbindbar. Die Fluidleitungen dienen (i) zur Wasserzufuhr zur Kartusche 12, (ii) zur Entnahme des mittels der Kartusche 12 gereinigten Wassers (Reinwasser oder Reinstwasser) und (iii) zur Abfuhr von Abwasser. Die Zuordnung der Anschlüsse 28 in der Aufnahme 26 zu den entsprechenden Fluidleitungen ist vorgegeben, sodass von einem Wasserzufuhranschluss, einem Rein(st)wasserentnahmeanschluss und einem Abwasserabfuhranschluss gesprochen werden kann, deren relative Anordnung eindeutig ist.

Auch die absoluten Positionen der Anschlüsse 28 in der Aufnahme 26 sind genau definiert, d. h. die Abstände der Anschlüsse 28 untereinander und deren Positionen relativ zu den unbeweglichen Teilen der Vorrichtung 10 sind genau vorgegeben, und sie sind im zusammengebauten Zustand der Vorrichtung 10 unveränderlich.

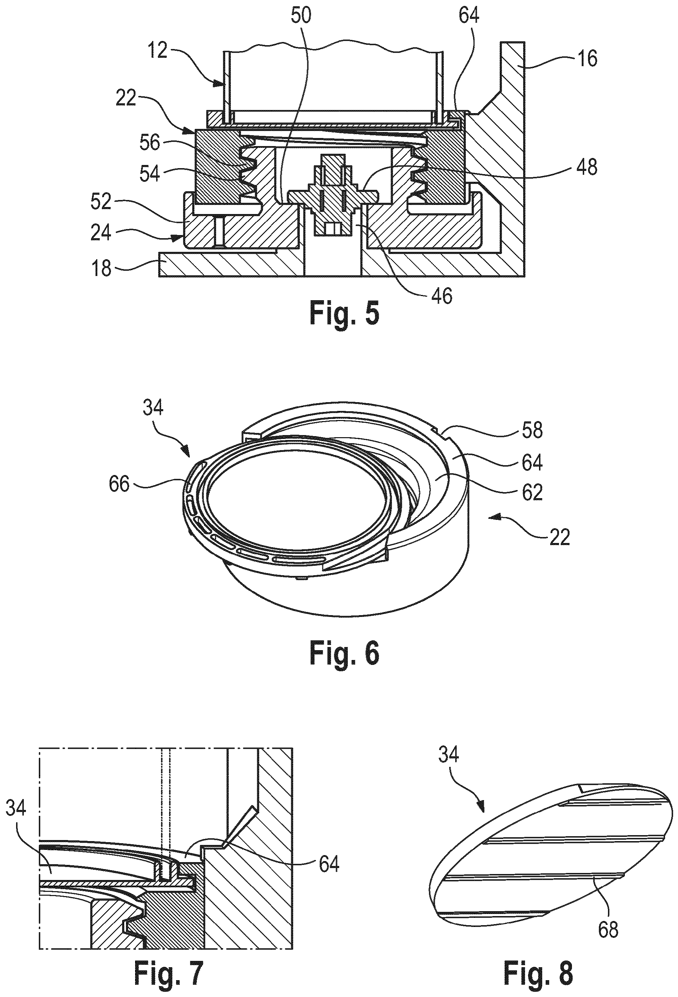

Die Anschlüsse 28 der Vorrichtung 10 haben eine konische Kontur. Genauer gesagt ist die untere Mündung jedes Anschlusses 28 von einem nach unten vorstehenden Ringabschnitt 30 umgeben. Der Außenrand des Ringabschnitts 30 ist so geneigt, dass sich der Ringabschnitt 30 nach unten verjüngt (siehe auch die Detailansicht in der später noch erläuterten Figur 8).

Die Anschlüsse 28 der Aufnahme 26 sind auf entsprechende Anschlüsse 32 der Kartusche 12 abgestimmt. Das bedeutet, dass die Anschlüsse 32 der Kartusche 12 so positioniert sind, dass sie genau unter die Anschlüsse 28 der Aufnahme 26 gebracht werden können, wie später noch genauer beschrieben wird.

Die Kartusche 12 umfasst einen unteren Boden 34, einen rohrförmigen Mittelteil 36 und einen oberen Deckel 38, die miteinander verschweißt sind. Im Mittelteil 36 sind die zur Wasseraufbereitung bzw. Reinigung vorgesehenen Einrichtungen und/oder Substanzen untergebracht. Die Anschlüsse 32 der Kartusche 12 befinden sich im Deckel 38, der ebenso wie der Boden 34 vorzugsweise durch Spritzgusshergestellt wird, wobei auch eine Herstellung durch 3D-Druck grundsätzlich möglich ist.

Die Anschlüsse 32 der Kartusche 12 sind komplementär zu den Anschlüssen 28 der Vorrichtung 10 geformt. Sie weisen jeweils einen Dom 40 auf, der von einer ringförmigen Vertiefung 42 umgeben ist. Der äußere Rand der Vertiefung 42 ist entsprechend dem Außenrand des Ringabschnitts 30 des Anschlusses 28 der Vorrichtung 10 geneigt, d. h. die Vertiefung 42 verjüngt sich nach unten. Auf den Dom 40 ist eine Axialdichtung in Form eines O-Rings 44 gespannt.

Es ist selbstverständlich möglich, die Gestaltung der Anschlüsse 32 der Kartusche 12 und der Vorrichtung 10 zu vertauschen. In diesem Fall weisen die Anschlüsse 32 der Kartusche 12 die (dann nach oben vorstehenden) Ringabschnitte 30 auf, und die Anschlüsse 28 der Vorrichtung 10 weisen die Dome 40 mit den O-Ringen 44 und den Vertiefungen 42 auf.

Die Anschlüsse 32 der Kartusche 12 entsprechen funktional den Anschlüssen 28 in der Aufnahme 26 der Vorrichtung 10, d. h. im Falle von drei Anschlüssen 28 weist die Kartusche 12 ebenfalls einen Wasserzufuhranschluss, einen Rein(st)-wasserentnahmeanschluss und einen Abwasserabfuhranschluss auf, die in Gegenüberlage zu den entsprechenden Anschlüssen 28 der Aufnahme 26 gebracht werden können. Die Kartusche 12 kann grundsätzlich aber auch weniger (oder mehr) Anschlüsse 32 als die Aufnahme 26 haben. In diesem Fall bleiben diejenigen Anschlüsse 28 bzw. 32, die in der Kartusche 12 oder in der Aufnahme 26 kein Pendant haben, ungenutzt. Wenn die Kartusche 12 z. B. nur einen Wasserzufuhranschluss und eine Rein(st)wasserentnahmeanschluss aufweist, bleibt der Abwasserabfuhranschluss der Aufnahme 26 ungenutzt.

Wie in den Figuren 4 und 5 zu erkennen ist, erhebt sich vom Bodenabschnitt 18 des Gehäuses 14 ein Zylinder 46, der als Drehlager für die Rändelschraube 24 dient. Auf der Oberseite des Zylinders 46 liegt eine Scheibe, die mittels einer Schraube und einer Mutter vertikal fixiert ist und so einen feststehenden Flansch 48 bildet, der einen horizontalen Abschnitt 50 der Rändelschraube 24 überdeckt. Der Bodenabschnitt 18, der Zylinder 46 und der vertikal fixierte horizontale Flansch 48 bilden zusammen eine Führungsstruktur für die Rändelschraube 24, die ein Drehen der Rändelschraube 24 erlaubt, aber ein vertikales Verschieben der Rändelschraube 24 verhindert.

Die Rändelschraube 24 weist einen unteren Betätigungsabschnitt 52 auf, dessen äußere Oberfläche geriffelt oder auf andere Weise profiliert ausgebildet sein kann, um die Bedienung zu erleichtern. An einem oberen Abschnitt ist ein Außengewinde 54 gebildet, insbesondere ein Trapezgewinde.

Das Außengewinde 54 der Rändelschraube 24 arbeitet mit einem dazu passenden Innengewinde 56 der auf die Rändelschraube 24 aufgesetzten, im Wesentlichen zylinderförmigen Halterung 22 zusammen. Die Halterung 22 weist an der Außenseite ihrer Mantelfläche eine vertikale Nut 58 auf, die auf einen Vorsprung 60 abgestimmt ist, der vom Mittelabschnitt 16 des Gehäuses 14 vorsteht (siehe Figur 4). Die Nut 58 und der darin eingreifende Vorsprung 60 bilden eine Sperrstruktur, die als Verdrehsicherung für die Halterung 22 dient. Dadurch ist gewährleistet, dass bei einem Drehen der Rändelschraube 24 die Halterung 22 nicht mitgedreht wird.

Vielmehr sorgen die ineinander eingreifenden Gewinde 54, 56 dafür, dass sich bei einer Drehung der Rändelschraube 24 die Halterung 22 vertikal nach oben oder nach unten - je nach Drehrichtung der Rändelschraube 24 - bewegt, ohne dass sich dabei die Halterung 22 dreht. Da die Nut 58 vertikal verläuft, behindert sie das Auf- und-ab-Bewegen der Halterung 22 nicht.

Die Gewinde 54, 56 sind so ausgelegt, dass sie ein selbsthemmendes Getriebe bilden. Das bedeutet, dass eine Drehung der Rändelschraube 24 ohne Fremdeinwirkung, d. h. auch wenn, die Halterung 22 mit einer Kartusche 12 belastet ist, nicht möglich ist.

In die Halterung 22 ist eine Kartusche 12 nur in einer vorgegebenen Orientierung (Drehstellung) einsetzbar, d. h. die Kartusche 12 kann nur dann in die Halterung 22 eingeführt werden, wenn sie bezüglich einer vertikalen Achse der Vorrichtung 10 eine bestimmte Orientierung hat.

Hierzu weist die Halterung 22 eine besondere Aufnahmekontur auf, die in den Figuren 6 und 7 gezeigt ist. Eine ringförmige, ebene Fläche der Halterung 22 dient als Auflagefläche 62 für den Boden 34 der Kartusche 12. Ein Außenbereich der Auflagefläche 62 ist teilweise von einer Randstruktur 64 überdeckt. Genauer gesagt überdeckt die Randstruktur 64 den radial äußeren Bereich der Auflagefläche 62 etwa über den halben Umfang der Halterung 22.

Der Boden 34 der Kartusche 12 steht radial über den Mittelteil 36 vor. Der vorstehende Randbereich des Bodens 34 hat eine auf die Aufnahmekontur der Halterung 22 abgestimmte Einschubkontur. Genauer gesagt weist der Randbereich über die Hälfte des Umfangs des Bodens 34 eine vertikal erhöhte Struktur 66 auf, während der übrige Umfangsbereich flach ausgebildet ist. Somit ist es nur möglich, die Kartusche 12 in horizontaler Richtung mit dem flachen Umfangsbereich voraus in die Halterung 22 einzuführen, da in einer anderen Orientierung der Kartusche 12 die Randstruktur 64 der Halterung 22 die erhöhte Struktur 66 des Bodens 34 der Kartusche 12 blockieren würde.

Wenn die Kartusche 12 vollständig in die Halterung 22 eingesetzt ist, liegen - in Umfangsrichtung betrachtet - den beiden Enden der erhöhten Struktur 66 des Kartuschenbodens 34 den beiden Enden der Randstruktur 64 der Halterung 22 direkt gegenüber, sodass ein Verdrehen der Kartusche 12 in der Halterung 22 um eine vertikale Achse nicht möglich ist. Ebenso wenig ist es möglich, die Kartusche 12 in der Halterung 22 vertikal oder horizontal zu verschieben - mit Ausnahme der der Einschubrichtung entgegengesetzten Richtung, sofern kein Einrastmechanismus oder dergleichen zum Fixieren der Kartusche 12 in der vollständig eingesetzten Position vorgesehen ist. Somit sind die horizontale Position und die Orientierung der vollständig eingesetzten Kartusche 12 genau definiert.

Um das Einführen der Kartusche 12 in die Halterung 22 zu erleichtern, kann der Boden 34 der Kartusche 12, wie in Figur 8 gezeigt, auf der Unterseite nach unten vorstehende Kufen 68 aufweisen. Die Kufen 68 verringern die Reibung zwischen dem Kartuschenboden 34 und der Auflagefläche 62 der Halterung 22. Die Kufen 68 sind so geformt und angeordnet, dass ein Kippen der Kartusche 12 in der Halterung 22 nicht möglich ist.

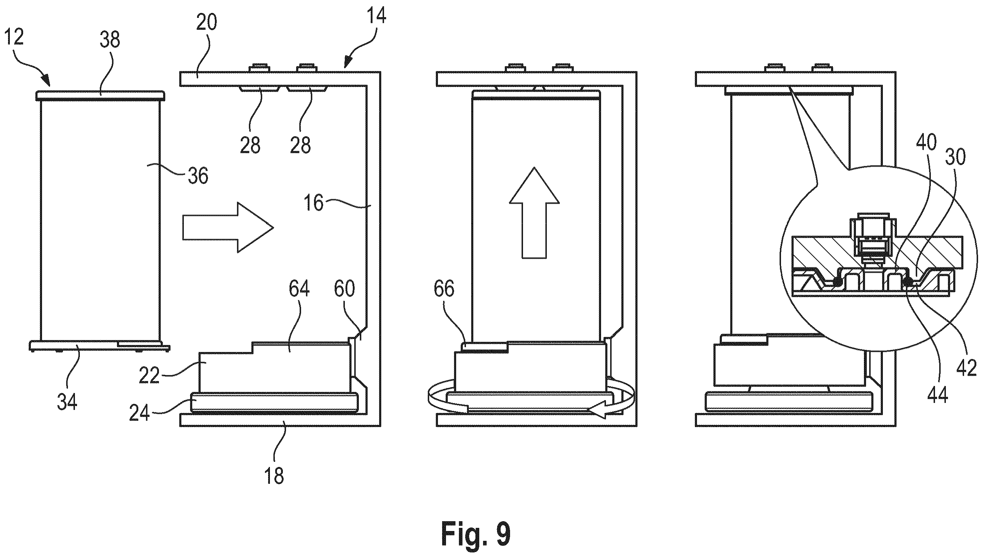

Nachfolgend wird anhand der Figur 9 beschrieben, wie die Kartusche 12 an die Vorrichtung 10 und damit an ein Wasseraufbereitungssystem angeschlossen wird.

Die Halterung 22 wird durch Drehen der Rändelschraube 24 in eine erste Richtung in eine untere Position bewegt, die als Freigabeposition bezeichnet werden kann. Die Kartusche 12 wird in dieser Position der Halterung 22 in der einzig möglichen Orientierung vollständig in die Halterung 22 eingeschoben, wobei die Randstruktur 64 der Halterung 22 als Führungsschiene dient. Zusammen mit der erhöhten Struktur 66 des Kartuschenbodens 34 sorgt die Randstruktur 64 der Halterung 22 auch dafür, dass die Kartusche 12 nach dem vollständigen Einsetzen ihre Orientierung beibehält und relativ zur Halterung 22 weder horizontal (mit Ausnahme der zur Einschubrichtung entgegengesetzten Richtung) noch vertikal verschoben werden kann.

Durch Drehen der Rändelschraube 24 in eine zur ersten Richtung entgegengesetzten zweiten Richtung werden die Halterung 22 und die darin eingesetzte Kartusche 12 vertikal nach oben in eine Anschlussposition bewegt, in der die Anschlüsse 32 der Kartusche 12 fest gegen die entsprechenden Anschlüsse 28 der Vorrichtung 10 gedrückt werden. Dank der konischen und zueinander komplementären Konturen der Anschlüsse 28 und 32 erfolgt automatisch eine Feinjustierung. Die mit Druck beaufschlagten O-Ringe 44 sorgen für eine Abdichtung der aneinander gekoppelten Anschlüsse 28 und 32.

Aufgrund der Selbsthemmung des durch die beiden Gewinde 54, 56 gebildeten Getriebes verbleibt die Halterung 22 in der Anschlussposition, ohne dass eine zusätzliche Fixierung notwendig ist. Die Kartusche 12 ist stabil in der Vorrichtung 10 eingespannt, ohne dass sie wackeln kann.

Wenn die Kartusche 12 aus der Vorrichtung 10 wieder entnommen werden soll, wird durch Drehen der Rändelschraube 24 in die erste Richtung die Halterung 22 zurück nach unten in die Freigabeposition bewegt. Dabei stellt die den radial vorstehenden Randbereich des Kartuschenbodens 34 teilweise überdeckende Randstruktur 64 der Halterung 22 sicher, dass die Kartusche 12 von der Halterung 22 mitgenommen wird und sich die Anschlüsse 28 und 32 voneinander entfernen.

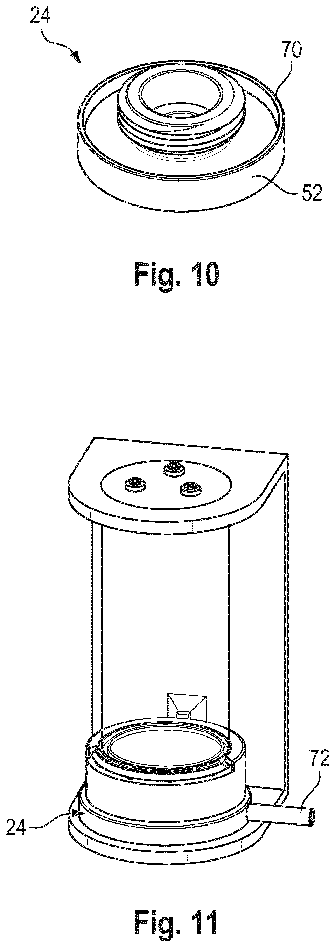

Figur 10 zeigt eine alternative Gestaltung der Rändelschraube 24 mit einem vertikal erhöhten Rand 70. Der erhöhte Rand 70 deckt einen Spalt zwischen der Rändelschraube 24 und der Halterung 22 so weit ab, dass keine Einklemmgefahr für den Benutzer bei der Bedienung besteht und Schmutz vom Eindringen in den Verstellmechanismus abgehalten wird.

Bei der in Figur 11 gezeigten Ausführungsform hat die Rändelschraube 24 einen Bedienhebel 72, der das Drehen der Rändelschraube 24 erleichtert.

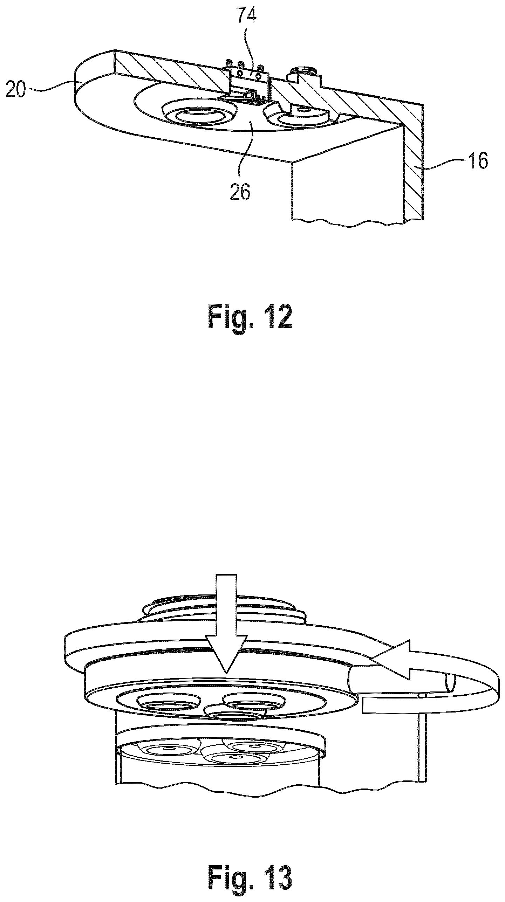

Figur 12 zeigt die optionale Verwendung eines Endlagensensors 74. Der Sensor 74 kann am Deckelabschnitt 20 des Gehäuses 14 angebracht werden und gibt ein von der vertikalen Position der Kartusche 12 relativ zur Aufnahme 26 abhängiges Signal aus. Im einfachsten Fall ist der Sensor 74 ein Kontaktsensor, der einen Kontakt registriert und ein Signal ausgibt, sobald sich die Kartusche 12 in der Anschlussposition befindet.

Eine weitere Ausführungsform der Vorrichtung 10 ist in Figur 13 gezeigt. Hier ist der Verstellmechanismus nicht unten an der Halterung 22, sondern oben an der Aufnahme 26 mit den Anschlüssen 28 der Vorrichtung 10 vorgesehen. Genauer gesagt steht das Gewinde 54 der Rändelschraube 24 hier in Eingriff mit einem dazu passenden Gewinde der relativ zum Deckelabschnitt 20 des Gehäuses 14 vertikal beweglichen Aufnahme 26, wogegen die Halterung 22 vertikal unbeweglich ist. Entsprechend dem zuvor beschriebenen Verstellprinzip kann durch Drehen der Rändelschraube 24 hier die Aufnahme 26 mit den Anschlüssen 28 vertikal nach oben und unten bewegt werden, um die Anschlussposition bzw. die Freigabeposition zu erreichen.

Es ist selbstverständlich möglich, verschiedene Merkmale der beispielhaft beschriebenen Ausführungsformen in geeigneter Weise miteinander zu kombinieren.

### Bezugszeichenliste

10 Vorrichtung
12 Kartusche
14 Gehäuse
16 Mittelabschnitt des Gehäuses
18 Bodenabschnitt des Gehäuses
20 Deckelabschnitt des Gehäuses
22 Halterung
24 Rändelschraube (Spindel)
26 Aufnahme
28 Anschlüsse der Aufnahme
30 Ringabschnitt
32 Anschlüsse der Kartusche
34 Boden der Kartusche
36 Mittelteil der Kartusche
38 Deckel der Kartusche
40 Dom
42 Vertiefung
44 O-Ring
46 Zylinder
48 Flansch
50 horizontaler Abschnitt der Rändelschraube
52 Betätigungsabschnitt der Rändelschraube
54 Gewinde der Rändelschraube
56 Gewinde der Halterung
58 Nut
60 Vorsprung
62 Auflagefläche
64 Randstruktur der Halterung
66 erhöhte Struktur des Kartuschenbodens
68 Kufen
70 erhöhter Rand der Rändelschraube
72 Bedienhebel
74 Endlagensensor

## Patentansprüche

1. Vorrichtung (10) zum Anschließen einer Reinigungskartusche (12) an ein Wasseraufbereitungssystem, mit
einer oberen Aufnahme (26), die wenigstens zwei, vorzugsweise drei, definiert positionierte Anschlüsse (28) zur Kopplung von entsprechend definiert positionierten Anschlüssen (32) der Kartusche (12) aufweist,
einer Halterung (22), in die die Kartusche (12) einsetzbar ist, wobei die Halterung (22) eine Aufnahmekontur aufweist, die ein Einsetzen der Kartusche (12) nur in einer vorgegebenen Orientierung und kein Verdrehen oder horizontales Verschieben der vollständig eingesetzten Kartusche (12), ausgenommen in der zu einer Einschubrichtung entgegengesetzten Richtung, erlaubt, und
einem Verstellmechanismus zum Verstellen der vertikalen Position der Anschlüsse (32) der eingesetzten Kartusche (12) oder der Anschlüsse (28) der Aufnahme (26), sodass die Anschlüsse (32) der eingesetzten Kartusche (12) und die Anschlüsse (28) der Aufnahme (26) wahlweise in eine Anschlussposition, in der die Anschlüsse (28, 32) gegeneinandergedrückt werden, und in eine Freigabeposition, in der die Anschlüsse (28, 32) voneinander entfernt sind, überführt werden können.

2. Vorrichtung (10) nach Anspruch 1, **dadurch gekennzeichnet, dass** die Aufnahme (26) mit den Anschlüssen (28) in einen Deckelabschnitt (20) der Vorrichtung (10) integriert ist.

3. Vorrichtung (10) nach Anspruch 1 oder 2, **dadurch gekennzeichnet, dass** die Aufnahmekontur der Halterung (22) eine Auflagefläche (62) aufweist, deren Außenbereich teilweise, vorzugsweise über den halben Umfang der Halterung (22), von einer Randstruktur (64) überdeckt ist.

4. Vorrichtung (10) nach einem der vorhergehenden Ansprüche, **dadurch gekennzeichnet, dass** die Anschlüsse (28) der Aufnahme (26) eine konische Kontur aufweisen.

5. Vorrichtung (10) nach einem der vorhergehenden Ansprüche, **dadurch gekennzeichnet, dass** zwischen den Anschlüssen (28) der Aufnahme (26) und den Anschlüssen (32) der Kartusche (12) Axialdichtungen, vorzugsweise O-Ringe (44) oder Flachdichtungen, vorgesehen sind.

6. Vorrichtung (10) nach einem der vorhergehenden Ansprüche, **dadurch gekennzeichnet, dass** die Anschlüsse (28) der Aufnahme (26) jeweils einen Dom (40) aufweisen, auf den die Axialdichtung, vorzugsweise der O-Ring (44), gespannt ist.

7. Vorrichtung (10) nach einem der vorhergehenden Ansprüche, **dadurch gekennzeichnet, dass** der Verstellmechanismus eine Spindel, vorzugsweise in Form einer Rändelschraube (24), mit einem Gewinde (54) aufweist, das mit einem Gewinde (56) der Halterung (22) oder der Aufnahme (26) zusammenwirkt.

8. Vorrichtung (10) nach Anspruch 7, **dadurch gekennzeichnet, dass** die Gewinde (54, 56) ein selbsthemmendes Getriebe bilden.

9. Vorrichtung (10) nach Anspruch 7 oder 8, **dadurch gekennzeichnet, dass** eine Führungsstruktur vorgesehen ist, die ein Drehen der Spindel erlaubt und gleichzeitig ein vertikales Verschieben der Spindel verhindert.

10. Vorrichtung (10) nach einem der Ansprüche 7 bis 9, **dadurch gekennzeichnet, dass** eine Sperrstruktur vorgesehen ist, die ein Verdrehen der Halterung (22) verhindert und ein Drehen der Spindel nicht behindert.

11. Wasseraufbereitungsgerät mit einer Vorrichtung (10) nach einem der vorhergehenden Ansprüche und einer Reinigungskartusche (12), **dadurch gekennzeichnet, dass** die Kartusche (12) einen unteren Boden (34), einen oberen Deckel (38) und einen dazwischenliegenden Mittelteil (36) aufweist, wobei im Deckel (38) mehrere Anschlüsse (32) gebildet sind.

12. Wasseraufbereitungsgerät nach Anspruch 11, **dadurch gekennzeichnet, dass** die Anschlüsse (32) der Kartusche (12) eine zur Kontur der Anschlüsse (28) der Vorrichtung (10) komplementäre Kontur aufweisen.

13. Wasseraufbereitungsgerät nach Anspruch 11 oder 12, **dadurch gekennzeichnet, dass** die Anschlüsse (32) der Kartusche (12) jeweils einen Dom (40) aufweisen, auf den eine Axialdichtung, vorzugsweise ein O-Ring (44), gespannt ist.

14. Wasseraufbereitungsgerät nach einem der Ansprüche 11 bis 13, **dadurch gekennzeichnet, dass** die Kartusche (12) eine Einschubkontur aufweist, die auf die Aufnahmekontur der Halterung (22) abgestimmt ist, wobei die Einschubkontur der Kartusche (12) vorzugsweise im Boden (34) gebildet ist und weiter vorzugsweise eine vertikal erhöhte Struktur (66) aufweist, die sich über den halben Umfang der Kartusche (12) erstreckt.

15. Verfahren zum Anschließen einer Reinigungskartusche (12) an ein Wasseraufbereitungssystem, **gekennzeichnet, durch** folgende Schritte:
- Bereitstellen eines Wasseraufbereitungsgeräts nach einem der Ansprüche 11 bis 14;
- Einsetzen der Kartusche (12) in die Halterung (22) in der vorgegebenen Orientierung; und
- Verstellen der vertikalen Position der Anschlüsse (32) der Kartusche (12) oder der Anschlüsse (28) der Aufnahme (26) mittels des Verstellmechanismus, sodass die Anschlüsse (32) der Kartusche (12) und die Anschlüsse (28) der Aufnahme (26) gegeneinandergedrückt werden.
